# FASCICULE DE BREVET EUROPEEN

(11) **EP 0 561 699 B1**
(45) Date de publication et mention de la délivrance du brevet: **07.02.1996**
(21) Numéro de dépôt: 93400681.8
(22) Date de dépôt: 17.03.1993
(51) Int. Cl.: G05B 19/05

(54) **Procédé de communication avec un automate programmable industriel et interface pour la mise en oeuvre du procédé**
Kommunikationsverfahren für eine programmierbare industrielle Steuerung und Schnittstelle für die Ausführung des Verfahrens
Communication method for a programmable industrial controller and interface for carrying out this method

(30) Priorité: 20.03.1992 FR 9203760
(43) Date de publication de la demande: 22.09.1993
(73) Titulaire: PROSYST S.A., F-59300 Valenciennes (FR)
(72) Inventeur: Asse, Abdallah, 59300 Valenciennes (FR); Willaeys, Didier, 59400 Cambrai (FR)
(74) Mandataire: Descourtieux, Philippe

(56) Documents cités:
- US-A- 4 333 143
- US-A- 4 404 651
- US-A- 4 882 702

## Description

L'invention a pour principal objet un procédé de communication entre un automate programmable industriel et un système utilisateur, tel que connu du document US-A-4 882 702.

L'invention trouve son application dans la simulation des cartes d'entrée/sortie d'un automate programmable industriel.

Actuellement, les automates programmables industriels pour piloter une installation industrielle, possédent des cartes d'entrée/sortie, encore appelées modules d'entrée/sortie , les modules d'entrée étant reliés aux capteurs de l'installation et les modules de sortie permettant à l'automate de commander des actionneurs de l'installation. Ces modules d'entrée/sortie sont connectés sur un bus périphérique, qui leur permet de communiquer avec une unité de commande qui séquence le programme de l'automate. Cette unité de commande fonctionne séquentiellement et de manière cyclique selon le principe suivant . Pendant chaque cycle, encore appelé cycle de fonctionnement de l'automate, l'unité de commande pendant une première période effectue une lecture des états de toutes les cartes d'entrée , puis pendant une deuxième période, séquence en interne le calcul de ses sorties , et enfin pendant une troisième période valide ce calcul en rafraichissant les états de ses cartes de sortie. Pour effectuer les opérations des premières et troisièmes périodes, l'unité de commande émet séquentiellement des adresses sur le bus périphérique. Ainsi classiquement pour chaque adresse émise, pendant la première période elle récupère sur ce bus périphérique une donnée qui lui est transmise par la carte d'entrée adressée, et pendant la troisième période elle écrit sur le bus périphérique une donnée pour la carte de sortie qui est adressée. Chaque donnée transitant sur le bus périphérique est donc associée à une adresse.

Il existe actuellement des cartes de communication qui permettent de remplacer les cartes d'entrée/sortie d'un automate, afin que celui-ci puisse dialoguer avec un système utilisateur tel qu'un système informatique simulant le fonctionnement d'une installation industrielle. Le procédé mis en oeuvre par ces cartes de communication consiste à gérer une première mémoire partagée en lecture par l'automate et en écriture par le système utilisateur, et une deuxième mémoire partagée en écriture par l'automate et en lecture par le système utilisateur.

L'inconvénient majeur d'un tel procédé de communication est que l'automate ne peut pas accéder en lecture à la première mémoire, en même temps que le système utilisateur y accéde en écriture. Le même problème se pose pour les accès à la deuxième mémoire. Par conséquent, la gestion qui est mise en oeuvre dans un tel procédé consiste à ralentir soit le système utilisateur, soit l'automate, lors d'un accès simultané à l'une des deux mémoires. Pour cette raison, ces cartes de communication fonctionnent exclusivement avec des automates dont le bus périphérique est de type asynchrone.

Un autre inconvénient du procédé de communication précité, réside dans le fait que le système utilisateur ayant un accès en lecture à une mémoire contenant tous les états des sorties de l'automate, celui-ci n'a pas un accès direct aux sorties qui ont été modifiées au cours d'un cycle de fonctionnement . En effet, pour connaître les sorties qui ont changé d'état, il doit lire toutes les données contenues dans la deuxième mémoire et les comparer avec celles qu'il avait lues au cycle de fonctionnement précédent. Or il s'avère que pendant un cycle de fonctionnement, les sorties qui changent d'état, suite au rafraichissement par l'unité de commande, sont peu nombreuses.

Le procédé de communication précité implique ainsi des temps d'accès élevés pour prendre en compte un petit nombre de nouvelles informations.

L'invention vise à remédier aux inconvénients précités et à permettre de réaliser par une interface une communication à la fois rapide et fiable entre un système utilisateur simulant le fonctionnement d'une installation industrielle, et un automate programmable industriel, comportant une unité de commande connectée à un bus périphérique.

Selon l'invention, on déclenche des cycles de communication de façon synchrone avec les cycles de fonctionnement de l'automate. Ensuite, l'interface comportant des premiers, deuxièmes, troisièmes, quatrièmes et cinquièmes moyens de mémorisation , le procédé consiste, au cours de chaque cycle de communication, soit à effectuer en parallèle les opérations suivantes :
1/ stocker chaque donnée émise par le système utilisateur dans les premiers (respectivement deuxièmes) moyens de mémorisation, et autoriser l'automate à lire dans les deuxièmes (respectivement premiers) moyens de mémorisation, selon qu'au cycle de communication précédent, on a stocké les données émises par le système utilisateur dans les deuxièmes (respectivement premiers) moyens de mémorisation et autorisé l'automate à lire dans les premiers ( respectivement deuxièmes) moyens de mémorisation,
2/ stocker dans les troisièmes moyens de mémorisation chaque donnée transitant sur le bus périphérique à l'adresse qui lui est associée, après avoir stocké l' adresse et la donnée dans les quatrièmes moyens de mémorisation, chaque fois que la donnée est différente d'une donnée contenue dans les troisièmes moyens de mémorisation à ladite adresse,
3/ et communiquer au système utilisateur des informations contenues dans les cinquièmes moyens de mémorisation quand celui-ci en fait la demande,
   soit à transférer dans les cinquièmes moyens de mémorisation les informations contenues dans les quatrièmes moyens de mémorisation.

Selon une première caractéristique particulière de l'invention, au début de chaque cycle de communication, on stocke dans les premiers (respectivement deuxièmes) moyens de mémorisation, toutes les données qui ont été émises par le système utilisateur au cours du cycle précédent dans les deuxièmes (respectivement premiers) moyens de mémorisation.

Selon une deuxième caractéristique particulière, on attend avantageusement plusieurs cycles de fonctionnement de l'automate, le nombre de cycles étant paramétrable, avant de communiquer les informations contenues dans les cinquièmes moyens de mémorisation quand le système utilisateur en fait la demande.

Selon une troisième caractéristique particulière de l'invention, l'interface comportant en outre un compteur de cycles, on incrémente la valeur de ce compteur à chaque cycle de fonctionnement de l'automate, et on stocke la valeur du compteur dans les quatrièmes moyens de mémorisation en même temps que chaque donnée et adresse, afin de leur affecter un numéro de cycle.

Selon une quatrième caractéristique particulière du procédé, l'interface comportant en outre une horloge, on stocke la valeur de cette horloge dans les quatrièmes moyens de mémorisation en même temps que chaque donnée et adresse, afin de les dater.

Selon une cinquième caractéristique particulière de l'invention, l'interface comportant des sixièmes moyens de mémorisation, on autorise l'automate à lire une donnée dans les premiers ou deuxièmes moyens de mémorisation seulement pour certaines adresses qui sont contenues dans les sixièmes moyens de mémorisation. Avantageusement, ces moyens de mémorisation ont été initialisés par le système utilisateur, préalablement au premier cycle de communication.

Selon une sixième caractéristique particulière de l'invention, l'interface comportant en outre des septièmes moyens de mémorisation, on autorise les opérations de stockage dans les troisièmes et quatrièmes moyens de mémorisation , seulement si l'adresse qui transite sur le bus périphérique est contenue dans les septièmes moyens de mémorisation. Avantageusement, le système utilisateur initialise les septièmes moyens de mémorisation, préalablement au premier cycle de communication.

L'invention a également pour objet une interface permettant de mettre en oeuvre un procédé de communication entre un automate programmable industriel comportant une unité de commande connectée à un bus périphérique, et un système utilisateur, cette interface étant caractérisée en ce qu'elle comprend :
- un microprocesseur connecté au système utilisateur par l'intermédiaire d'un bus de communication,
- un port de communication permettant d'adapter électriquement et logiquement le bus périphérique en un bus d'adresses, de données et de contrôle,
- des premiers et deuxièmes moyens de mémorisation accessibles en lecture par l'automate et en écriture par le microprocesseur,
- des troisièmes moyens de mémorisation accessibles en écriture par l'automate sous la commande d'un signal d'écriture,
- des quatrièmes moyens de mémorisation permettant le stockage des données circulant sur le bus d'adresses et le bus de données, dans une pile qui est accessible en lecture par le microprocesseur,
- des cinquièmes moyens de mémorisation gérés exclusivement par le microprocesseur et destinés à stocker temporairement le contenu de la pile,
- un organe de gestion qui d'une part utilise les adresses émises par l'automate pour affecter en alternance et de façon synchrone avec un cycle de fonctionnement de l'automate sur demande du microprocesseur, les premiers (respectivement deuxièmes) moyens de mémorisation à l'automate et les deuxièmes (respectivement premiers) moyens de mémorisation au microprocesseur, et qui d'autre part synchronise les opérations d'écriture du microprocesseur et de lecture de l'automate dans les moyens de mémorisation qui leur sont affectés,
- un système d'acquisition comportant des moyens de comparaison entre une donnée transitant sur le bus de données et une donnée émise par les troisièmes moyens de mémorisation sous la commande d'un signal de lecture, et des-moyens de synchronisation qui à chaque opération de lecture ou d'écriture de l'automate, d'une part séquencent le signal de lecture pour les troisièmes moyens de mémorisation, et d'autre part délivrent le signal d'écriture pour les troisièmes moyens de mémorisation, et un signal d'autorisation de stockage pour les quatrièmes moyens de mémorisation, en fonction de l'état d'un signal de comparaison émis par les moyens de comparaison, et en ce que le microprocesseur est apte,

soit à demander à l'organe de gestion, un changement d'affectation des premiers et deuxièmes moyens de mémorisation,
soit à écrire dans les moyens de mémorisation qui lui sont affectés par l'organe de gestion, chaque donnée émise par le système utilisateur sur le bus de communication, à une adresse émise par le système sur ledit bus,
soit à émettre sur le bus de communication en parallèle ou en série, les informations contenues dans les cinquièmes moyens de mémorisation chaque fois qu'il reçoit une donnée caractéristique émise par le système utilisateur,
soit à transférer dans les cinquièmes moyens de mémorisation les informations contenues dans la pile lorsqu'il n'effectue aucune des deux opérations précitées et lorsque le signal d'autorisation de stockage délivré par le système d'acquisition est inactif.
Conformément à la première caractéristique du procédé précité, le microprocesseur est apte à rafraîchir, après chaque changement d'affectation des premiers et deuxièmes moyens de mémorisation, les moyens de mémorisation qui lui sont nouvellement affectés par l'organe de gestion, avec les données qui lui ont été transmises par le système utilisateur après le précédent changement d'affectation.

L'organe de gestion peut en outre comprendre un compteur de cycles qui est incrémenté à la fin de chaque cycle de fonctionnement de l'automate, et dont les sorties sont reliées au microprocesseur. Dans ce cas, conformément à la deuxième caractéristique le microprocesseur est apte à attendre un certain nombre d'incrémentations du compteur avant d'émettre des informations sur le bus de communication.

Conformément à la troisième caractéristique du procédé les sorties du compteur de cycles sont reliées aux entrées de la pile afin que la valeur du compteur puisse y être stockée.

Conformément à la quatrième caractéristique du procédé, l'interface comprend en outre une horloge dont les sorties sont reliées aux entrées de la pile.

Selon un mode particulier de réalisation permettant la mise en oeuvre de la cinquième caractéristique du procédé, l'organe de gestion comporte des sixièmes moyens de mémorisation constitués d'une table de configuration qui contient chaque adresse pouvant être émise par l'automate sur le bus périphérique concaténée avec une donnée de contrôle-commande, qui spécifie l'adresse. Cette table de configuration est avantageusement accessible en écriture par le microprocesseur qui est dans ce cas apte à initialiser cette table de configuration avec des données émises par le système utilisateur.

Selon un autre mode particulier de réalisation permettant la mise en oeuvre de la sixième caractéristique du procédé, l'interface comprend des moyens de reconnaissance des adresses émises par l'automate, qui séquencent un signal d'autorisation pour les moyens de synchronisation, à partir d'adresses stockées dans des septièmes moyens de mémorisation. Avantageusement , les septièmes moyens de mémorisation étant accessibles en écriture par le microprocesseur, celui-ci est apte à les initialiser avec des adresses qui lui ont été transmises par le système utilisateur.

D'autres caractéristiques et avantages ressortiront de la description suivante d'un mode particulier de réalisation de l'invention, donné à titre d'exemple en référence aux dessins annexés sur lesquels :
la figure 1 schématise l'automate programmable industriel communiquant avec un système utilisateur par l'intermédiaire d'une interface,
la figure 2 est un synoptique général de l'interface de communication,
la figure 3 est un synoptique des premiers et deuxièmes moyens de mémorisation,
la figure 4 est un synoptique de l'organe de gestion selon un mode particulier de réalisation,
la figure 5 est un synoptique du système d'acquisition selon un mode particulier de réalisation.

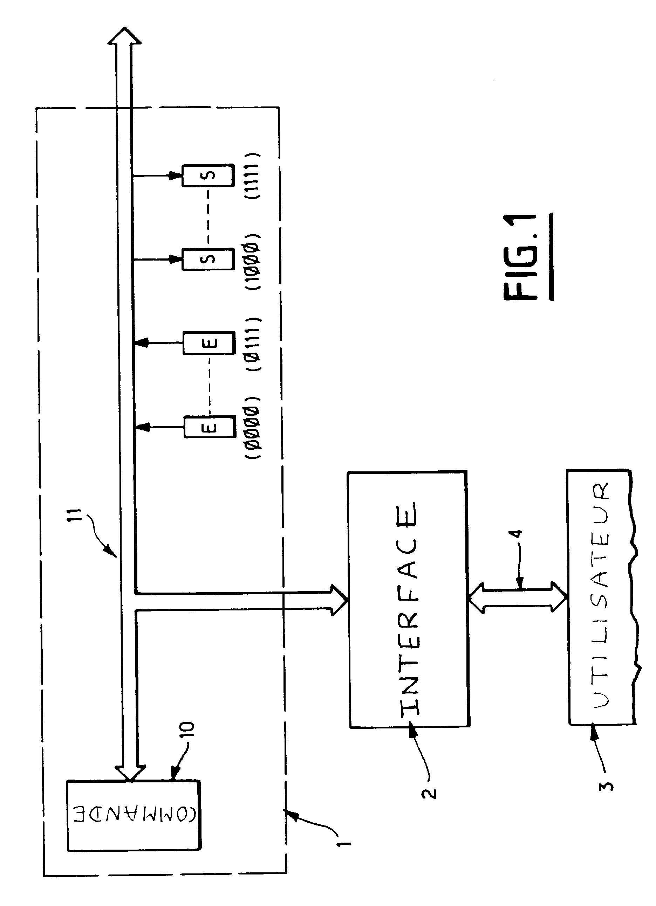

Si l'on se reporte à la figure 1, il apparaît que l'automate programmable industriel 1 avec lequel un système utilisateur 3 communique par l'intermédiaire d'une interface 2, est constitué d'une unité de commande 10 qui peut adresser par l'intermédiaire d'un bus périphérique 11, en lecture huit modules d'entrée dont les adresses binaires s'étendent de (0000) à (0111) et en écriture huit modules de sorties dont les adresses binaires s'étendent de (1000) à (1111).

Conformément au principe connu du fonctionnement d'un automate programmable industriel, l'unité de commande fonctionne de manière cyclique ; chaque cycle encore appelé cycle de fonctionnement de l'automate peut être décomposé en trois périodes :
- première période : l'unité de commande adresse en lecture tous ses modules d'entrée,
- deuxième période : l'unité de commande séquence les calculs internes pour lesquels elle est programmée,
- troisième période : l'unité de commande adresse en écriture tous ses modules de sortie.

Ainsi d'une manière générale, sur le bus périphérique transitent des adresses et des données, chaque donnée étant associée à l'adresse d'un module soit d'entrée soit de sortie. Selon les automates, l'adresse et la donnée transitent sur le bus périphérique soit en parallèle, soit en série.

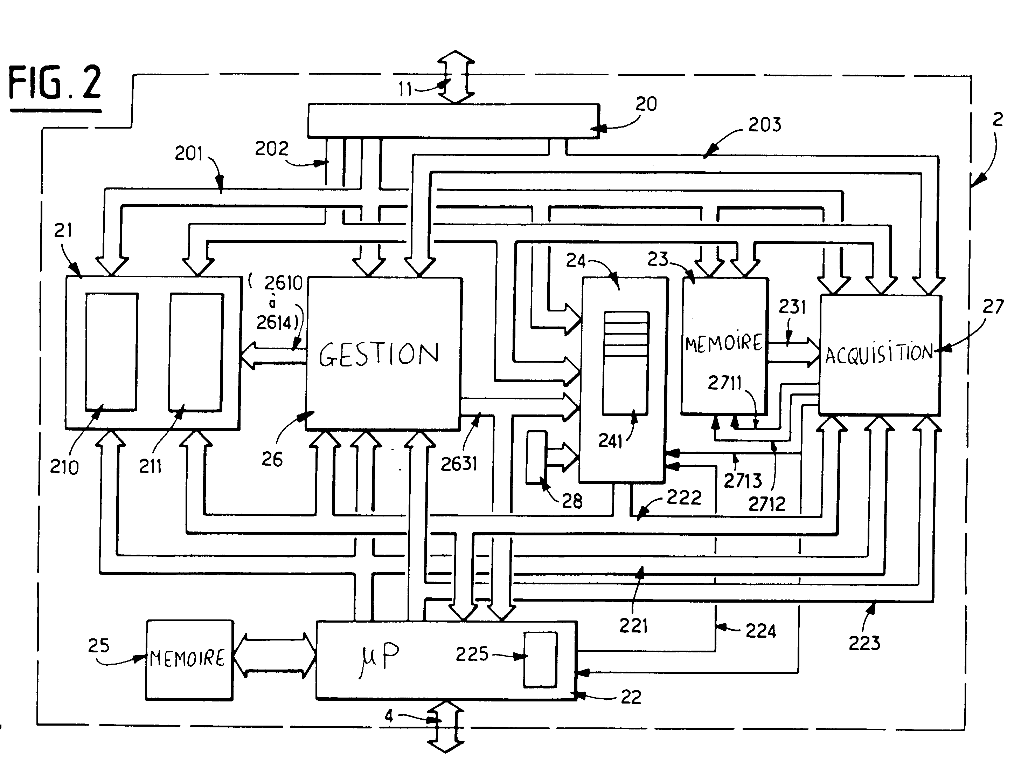

Si l'on se reporte à la figure 2, il apparaît que l'interface 2 est connectée au bus périphérique 11 par l'intermédiaire d'un port de communication 20.
Ce port de communication a pour fonction d'adapter logiquement et électriquement le bus périphérique 11 en un bus parallèle constitué d'un bus d'adresses 201, d'un bus de données 202 et d'un bus de contrôle 203. Cette adaptation dépend du type de bus périphérique qui peut être série ou parallèle, et synchrone ou asynchrone. Par conséquent le port de communication 20 est lié pour sa réalisation à l'automate programmable industriel et au type de bus périphérique. Les différents modes de réalisation possibles des ports de communication, qui sont par ailleurs déjà connus, ne seront donc pas décrits.

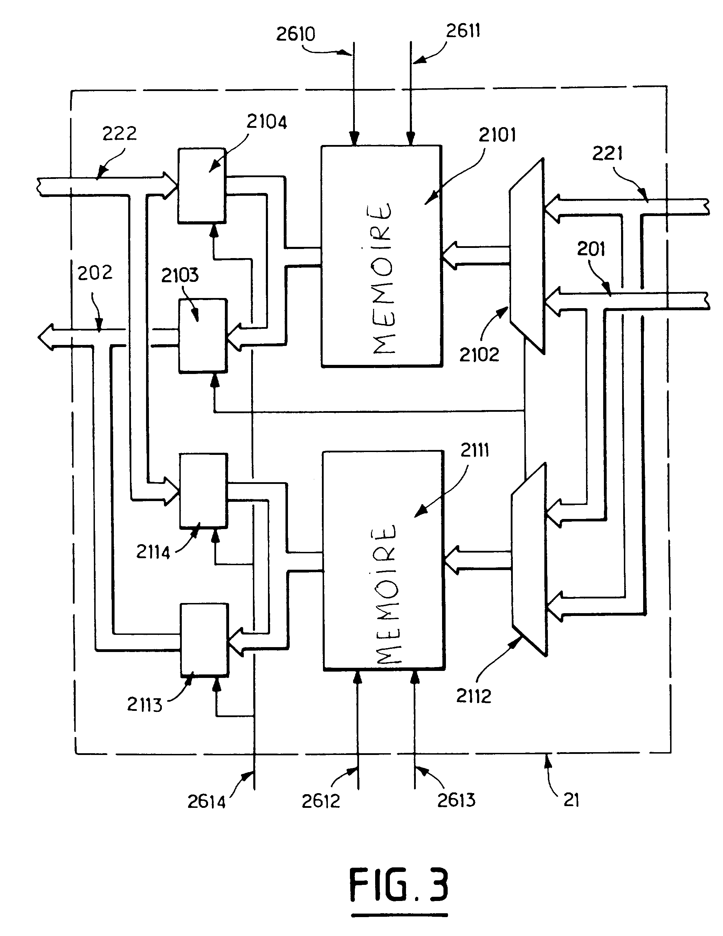

Conformément à l'invention, l'interface 2 comporte un microprocesseur 22 qui gère de manière connue un bus d'adresses 221, un bus de données 222 et un bus de contrôle 223, et des premiers et deuxièmes moyens de mémorisation 210 , 211 . Le synoptique de ces moyens de mémorisation représenté à la figure 3 fait clairement apparaître leur fonctionnement. Les premiers (respectivement deuxièmes) moyens de mémorisations 210 (respectivement 211) sont constitués d'une mémoire 2101 (respectivement 2111), du type mémoire vive, d'un multiplexeur 2102 (respectivement 2112) et de deux circuits de verrouillage 2103 , 2104 (respectivement 2113 , 2114 ). Lorsque le signal d'affectation 2614 est actif, la mémoire 2101 est connectée en entrée au bus de données 222 et est adressée par les signaux transitant sur le bus d'adresses 221, tandis que la mémoire 2111 est connectée en sortie au bus de données 202, et est adressée par les signaux transitant sur le bus d'adresses 201.

Ainsi la mémoire 2101 est affectée au microprocesseur alors que la mémoire 2111 est affectée à l'automate. Lorsque le signal d'affectation est inactif, l'affectation des mémoires est inversée.

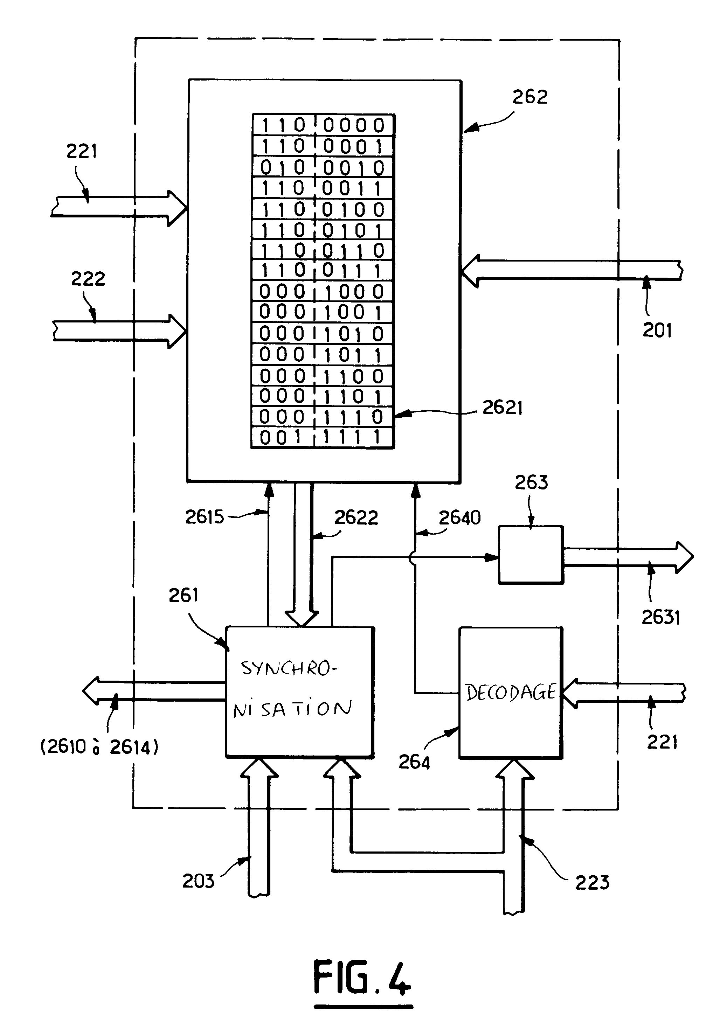

Les opérations de lecture dans les mémoires 2101 et 2111 sont autorisées par les signaux 2610 et 2612 alors que les opérations d'écriture sont séquencées par les signaux 2611 et 2613.
Les signaux 2610 à 2614 sont gérés par un organe de gestion 26, dont le fonctionnement va être détaillé. Si l'on se reporte à la figure 4 qui est une représentation d'un mode particulier de réalisation de l'organe de gestion 26, il apparaît que celui-ci est constitué de sixièmes moyens de mémorisation 262 et d'un organe de synchronisation 261. Les sixièmes moyens de mémorisation 262, sont constitués d'une table de configuration 2621 qui contient les 16 données suivantes :

| | | | |
|---|---|---|---|
| 1. | 110 0000 | 9. | 000 1000 |
| 2. | 110 0001 | 10. | 000 1001 |
| 3. | 010 0010 | 11. | 000 1010 |
| 4. | 110 0011 | 12. | 000 1011 |
| 5. | 110 0100 | 13. | 000 1100 |
| 6. | 110 0101 | 14. | 000 1101 |
| 7. | 110 0110 | 15. | 000 1110 |
| 8. | 110 0111 | 16. | 001 1111 |

Les 4 bits de poids faible de chaque donnée correspondent à une adresse pouvant être émise par l' unité de commande. Les trois bits de poids fort correspondent à une donnée de contrôle-commande qui spécifie chaque adresse et dont la signification sera explicitée ultérieurement.

Chaque fois que l'interface reçoit sur le bus d'adresses 201 une adresse émise par l'unité de commande 10 , l'organe de synchronisation 261 émet un signal de lecture 2615 pour les sixièmes moyens de mémorisation 262. Ceux-ci lui renvoient alors la donnée de contrôle qui est concaténée dans la table de configuration 2621 avec l'adresse émise par l'unité de commande. Ainsi, si l'adresse émise est (0000), l'organe de synchronisation 261 récupère la donnée de contrôle-commande (110) sur le bus 2622.

Le bit de poids faible de cette donnée est un bit qui permet à l'organe de synchronisation 261 d'activer ou de désactiver alternativement le signal d'affectation 2614, en fonction d'un signal de demande de changement d'affectation des mémoires 2101, 2111, qui est géré par le microprocesseur. La gestion de ce signal qui fait partie du bus de contrôle 223, par le microprocesseur 22, sera expliquée ultérieurement. Dans le cas présent, chaque fois que l'unité de commande émet l'adresse (1111) dont la donnée de contrôle-commande associée dans la table de configuration à un bit de poids faible actif, l'organe de synchronisation 261 active (respectivement désactive) le signal d'affectation s'il était inactif (respectivement actif),selon que le microprocesseur 22 a fait la demande d'un changement d'affectation des mémoires 2101 , 2111 .En outre, chaque fois que l'unité de commande émet l'une quelconque des adresses comprises entre (0000) et (0111), elle active sur le bus de contrôle 203 un signal caractéristique. A l'aide de ce signal, l'organe de synchronisation 261 active soit le signal 2610 soit le signal 2612, selon que le signal d'affectation 2614 est inactif ou actif.
De façon concomitante, chaque fois que le microprocesseur 22 veut accéder en écriture aux premiers ou deuxièmes moyens de mémorisation 210, 211, il séquence sur son bus de contrôle 223 un signal caractéristique. A l'aide de ce signal, l'organe de synchronisation 261 active soit le signal 2611, soit le signal 2613 selon que le signal d'affectation 2614 est actif ou inactif. Ainsi l'organe de gestion 26 synchronise en parallèle les opérations de lecture de l'unité de commande 10 et d'écriture du microprocesseur 22 dans la mémoire qui leur est affectée.

Dans l'application particulière qui est décrite, le changement d'affectation des mémoires 2101 , 2111 qui est demandé par le microprocesseur 22 , est synchronisé par l'émission de l'adresse (1111) par l'unité de commande.
Cependant, d'une façon plus générale, ce changement d'affectation des mémoires 2101, 2111 demandé par le microprocesseur 22 peut être synchronisé avec l'une quelconque des adresses émises par l'unité de commande 10 lors de la troisième période du cycle de fonctionnement de l'automate. De préférence l'organe de gestion effectue le changement d'affectation ni pendant la première période d'un cycle de fonctionnement de l'automate, car l'unité de commande accède en lecture à l'une des deux mémoires 2101, 2111 , ni pendant la deuxième période car dans certains automates, l'unité de commande peut occasionnellement y effectuer des opérations de lecture.

Chaque changement d'affectation des mémoires 2101 , 2111 marque le début de ce qu'on appelle un cycle de communication. Par conséquent, si pendant un cycle de communication donné, l'unité de commande peut accéder en lecture à la mémoire 2101 et le microprocesseur en écriture à la mémoire 2111, alors au cycle de communication suivant, l'unité de commande pourra accéder en lecture à la mémoire 2111, et le microprocesseur en écriture à la mémoire 2101. Dans le cas présent, l'adresse de synchronisation étant (1111), le début de chaque cycle de communication est synchronisé avec la fin d'un cycle de fonctionnement de l'automate programmable industriel, qui est soit le cycle de fonctionnement en cours lors de la demande de changement d'affectation des mémoires 210,211 par le microprocesseur, soit le cycle de fonctionnement suivant immédiatement cette même demande. Il est important de remarquer que l'organe de gestion a uniquement besoin de connaître l'adresse de synchronisation (1111), pour effectuer le séquencement, tel qu'il a été décrit, des signaux 2610 à 2614 . Dans un mode de réalisation plus simple de l'organe de gestion, la table de configuration 2621 peut donc être remplacée par un registre contenant l'adresse (1111).

Le deuxième bit de chaque donnée de contrôle-commande concaténée avec une adresse dans la table de configuration 2621, permet de spécifier si l'adresse correspond à une opération de lecture ou d'écriture de l'unité de commande, selon qu'il est actif ou inactif. Ce bit permet alors à l'organe de synchronisation 261 de vérifier la cohérence de l'adresse émise sur le bus d'adresse 201 par l'unité de commande, avec l'opération de lecture demandée par celle-ci sur le bus de contrôle 203, avant d'autoriser le séquencement de l'un des signaux 2610 , 2612 .

Enfin le bit de poids fort de chaque donnée de contrôle-commande est un bit d'autorisation de lecture. Lorsqu'il est actif, l'organe de synchronisation 261 autorise le séquencement des signaux 2610 ou 2612. Dans le cas présent, l'organe de synchronisation n'activera pas les signaux 2610 ou 2612, lors d'une opération de lecture de l'unité de commande pour l'adresse (0010). Ainsi l'unité de commande accède en lecture à l'une des mémoires 2101 , 2111 seulement pour certaines adresses qui sont contenues dans la table de configuration 2621 , ces adresses étant celles dont la donnée de contrôle-commande qui leur est associée possède deux bits de poids fort actifs.
Avantageusement, la table de configuration 2621 est accessible en écriture par le microprocesseur 22 par l'intermédiaire d'un module 264 de décodage, qui synchronise de façon classique le signal d'écriture 2640 à partir d'un décodage du bus d'adresses 221 et du bus de contrôle 223.

Conformément à l'invention, la figure 2 fait apparaître des troisièmes et quatrièmes moyens de mémorisation 23,24 . Les troisièmes moyens de mémorisation 23 sont une mémoire, du type mémoire vive. Chaque fois que le signal 2711 est actif, la mémoire 23 stocke la donnée du bus de données 202 à l'adresse correspondant au bus d'adresses 201. Chaque fois que le signal 2712 est actif, la mémoire 23 émet sur le bus 231, la donnée qu'elle contient à l'adresse qui est spécifiée sur le bus d'adresses 201.

Les quatrièmes moyens de mémorisation 24 sont avantageusement constitués d'une pile 241. Chaque fois que le signal d'autorisation de stockage 2713 est actif, les quatrièmes moyens de mémorisation 24 stockent dans la pile 241, l'adresse du bus d'adresses 201 et la donnée du bus de données 202. De plus, le contenu de la pile 241 est accessible par le microprocesseur en lecture, sous la commande d'un signal de dépilement 224. Chaque fois que le microprocesseur 22 active le signal de dépilement 224, les quatrièmes moyens de mémorisation 24 séquencent le transfert de données contenues dans la pile 241 à destination du microprocesseur 22, par l'intermédiaire de son bus de données 222, sous réserve que le signal d'autorisation de stockage 2713 est inactif ; ce qui permet d'éviter les conflits d'accès à la pile 241 entre le microprocesseur 22 et le système d'acquisition 27, en accordant la priorité à ce dernier.

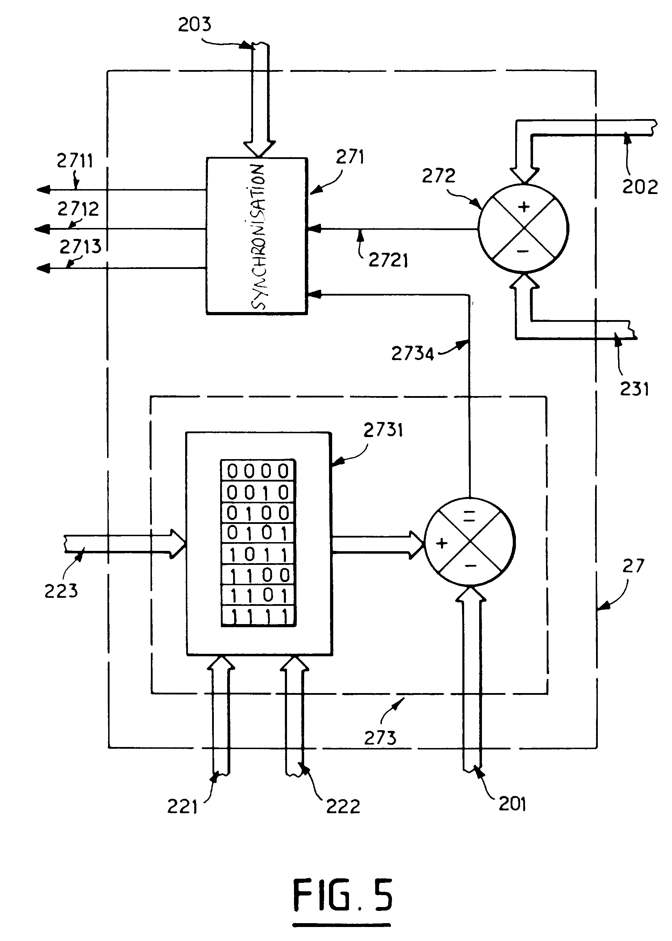

Les signaux 2711 , 2712 , 2713 sont séquencés par le système d'acquisition 27, dont le fonctionnement va être détaillé. Si l'on se reporte au synoptique de la figure 5, il apparaît que le système d'acquisition 27 est constitué de moyens de synchronisation 271 et de moyens de comparaison 272. Les moyens de synchronisation 271 activent dans un premier temps le signal 2712, chaque fois qu'ils détectent sur le bus de contrôle 203, une opération d'écriture ou de lecture de l'unité de commande 10 ; ce qui signifie notamment que l'unité de commande a émis une adresse sur le bus d'adresses 201. Conformément à ce qui a été décrit du fonctionnement des troisièmes moyens de mémorisation 23, le module d'acquisition 27 récupère alors sur le bus 231 une donnée contenue dans lesdits moyens à l'adresse émise par l'unité de commande. Cette donnée est comparée avec une donnée circulant sur le bus de données 202 et qui est, soit une donnée émise par l'unité de commande 10 au cours de la troisième période d'un cycle de fonctionnement, soit une donnée émise par l'une des deux mémoires 2101, 2111 ou par tout autre périphérique connecté sur le bus périphérique 11, lors d'une opération de lecture de l'unité de commande 10. Si les données comparées sont différentes, les moyens de comparaison 272, activent le signal de comparaison 2721. Enfin, si le signal de comparaison 2721 émis par les moyens de comparaison 272 est actif, les moyens de synchronisation 271 activent le signal d'autorisation de stockage 2731, et désactivent le signal de lecture 2712 puis activent temporairement le signal d'écriture 2711. Les troisièmes moyens de mémorisation 23 stockent alors la donnée circulant sur le bus de données 202.

Plus particulièrement, les moyens de synchronisation 271 séquencent les signaux tel que cela vient d'être décrit, seulement si le signal d'autorisation 2734 est actif. Ce signal est activé par des moyens de reconnaissance 273. Ceux-ci sont constitués de septièmes moyens de mémorisation 2731, qui contiennent certaines adresses pouvant être émises par l'unité de commande. Ainsi à chaque fois que l'unité de commande 10 émet une adresse sur le bus d'adresses 201, qui est contenue dans les septièmes moyens de mémorisation 2731, les moyens de reconnaissance 273 autorisent les moyens de synchronisation 271 à fonctionner en activant le signal 2734. Avantageusement les septièmes moyens de mémorisation 2731 sont accessibles en écriture par le microprocesseur 22 qui peut donc les initialiser avant la mise en service de l'automate par exemple.

Conformément à l'invention le microprocesseur 22 gére des cinquièmes moyens de mémorisation 25.
Chaque fois que les moyens de synchronisation 271 activent le signal 2713, ils génèrent en même temps une interruption non prioritaire pour le microprocesseur 22. Celui-ci est alors averti de chaque opération de stockage, dans la pile 241. Ainsi, quand le microprocesseur 22 n'écrit pas de donnée dans l'une des deux mémoires 2101, 2111 comme il a été précédemment décrit, et quand il n'émet pas de donnée en direction du système utilisateur comme il sera expliqué ultérieurement, celui-ci prend en compte les interruptions non prioritaires qui ont été émises par les moyens de synchronisation 271. Pour cela, chaque interruption ayant provoqué l'incrémentation d'un compteur interne 225, le microprocesseur 22 active le signal 224 de manière à récupérer les informations contenues dans la pile 241, afin de les transférer dans les cinquièmes moyens de mémorisation 25. De plus, à chaque transfert d'information, il décrémente le compteur interne. Tant que le compteur interne 225 n'est pas nul, le microprocesseur dès qu'il le peut, active le signal 224. Conformément à ce qui a été décrit jusqu'à présent, une information contenue dans la pile 241 est constituée d'une adresse et d'une donnée. Dans un mode de réalisation plus particulier, cette information sera complétée.

Le synoptique de la figure 2 fait apparaître que le microprocesseur 22 est connecté au système utilisateur 3 par l'intermédiaire d'un bus de communication 4. Ce bus de communication 4 peut être série ou parallèle. Chaque fois que le système utilisateur 3 émet une donnée caractéristique reconnue par le microprocesseur 22, celui-ci séquence alors le transfert de toutes les informations contenues dans les cinquièmes moyens de mémorisation 25 sur le bus de communication 4 à destination du système utilisateur 3.

D'autre part, le système utilisateur 3 émet sur le bus de communication 4 à destination du microprocesseur 22, des données, et des adresses, chaque donnée étant associée à une adresse. Selon le type de bus, la donnée et l'adresse qui lui est associée sont émises soit en série, soit en parallèle. A chaque fois, qu'il reçoit une donnée et une adresse sur le bus de communication, le microprocesseur 22, écrit la donnée à ladite adresse dans l'une des deux mémoires 2101, 2111.

Conformément à la description qui a été faite du fonctionnement des premiers et deuxièmes moyens de mémorisation 210, 211, et de l'organe de gestion 26, cette écriture peut se faire à n'importe quel instant, sans que cela occasionne une quelconque perturbation du cycle de l'automate.

Dans un mode de réalisation particulier, chaque fois que le système utilisateur 3 à transmis au microprocesseur 22, la dernière donnée destinée à être mémorisée lors du cycle de communication en cours, le microprocesseur effectue une demande de changement d'affectation des mémoires 2101 et 2111. Cette demande est alors prise en compte par l'organe de gestion 26, qui synchronise le changement d'affectation comme cela a été précédement décrit. On peut envisager différents protocoles de communication entre le système utilisateur 3 et le microprocesseur 22, permettant à ce dernier de détecter l'émission par le système utilisateur de la dernière donnée à stocker dans l'une des mémoires 2101 ou 2111, affectée au microprocesseur 22. Le système utilisateur peut notamment communiquer au microprocesseur, préalablement à l'envoi de données successives, le nombre d'informations qu'il va transmettre.

Il apparaît sur le synoptique de l'organe de gestion 26 (figure 4) que celui-ci comprend en outre un compteur de cycles 263. Celui-ci est incrémenté par l'organe de gestion à chaque fois que l'unité de commande 10 émet la dernière adresse correspondant à la troisième période du cycle de fonctionnement, en l'occurence l'adresse (1111). Dans le mode particulier de réalisation de l'organe de gestion 26 décrit à la figure 4, le compteur 263 est incrémenté par l'organe de synchronisation 261 chaque fois que celui-ci reçoit sur le bus 2622, une donnée de contrôle-commande dont le bit de poids faible vaut 1.

Les sorties de ce compteur 263 sont en outre reliées au microprocesseur 22. Selon l'invention le microprocesseur 22 est programmé pour rafraîchir , à chaque nouveau cycle de communication caractérisé par un changement d'état du signal d'affectation 2614, la mémoire qui lui est nouvellement affectée, avec les données qui ont été envoyées par le système utilisateur, lors du cycle de communication précédent et qu'il avait stockées dans la mémoire qui lui était alors affectée.

La mise en oeuvre de cette caractéristique s'avère nécessaire uniquement pour un système utilisateur 3 qui n'envoie pas au microprocesseur 22, au cours d'un cycle de communication, toutes les données nécessaires à un rafraîchissement total par ce dernier de la mémoire qui lui est affectée.

Avantageusement le microprocesseur 22 est aussi programmé pour attendre un nombre de cycles de fonctionnement de l'automate, de l'ordre de 3 à 5 cycles, avant de communiquer au système utilisateur 3 les informations qui sont contenues dans les cinquièmes moyens de mémorisation 25 , le nombre de cycles correspondant à un nombre d'incrémentation du compteur 263. On s'assure ainsi que l'automate a eu le temps de prendre en compte et de traiter les dernières données qui ont été stockées dans l'une des deux mémoires 2101, 2111 par le microprocesseur 22 et qui ont été envoyées par le système utilisateur 3.

Selon une autre caractéristique de l'invention, l'interface 2 comporte en outre une horloge 28. Celle-ci sert à dater chaque information stockée dans la pile 241. Pour cette raison, elle est connectée en entrée aux quatrièmes moyens de mémorisation 24. Ainsi à chaque opération de stockage, les quatrièmes moyens de mémorisation 24 stockent l'adresse et la donnée qui circulent respectivement sur le bus d'adresses 201 et de données 202, ainsi que la valeur de l'horloge 28. De même les sorties du compteur de cycles 263 peuvent être reliées en entrée au quatrièmes moyens de mémorisation 24 afin d'affecter un numéro de cycle à chaque information stockée dans la pile 241. Ainsi, lorsque le système utilisateur 3 reçoit une information qui lui est communiquée par le microprocesseur 22, il connaît, grâce à l'adresse, quel est le module d'entrée ou de sortie dont l'état a été modifié, grâce à la donnée quelle est la valeur de cette modification, grâce au compteur 263 et à l'horloge 28 durant quel cycle de fonctionnement et à quelle date, l'automate a soit pris en compte soit provoqué le changement, selon que le module concerné est un module d'entrée ou de sortie. Si l'interface comporte selon un mode particulier de réalisation précédemment décrit les sixièmes ou septièmes moyens de mémorisation 262, 2731, le système utilisateur 3, avantageusement les initialisera par l'intermédiaire du microprocesseur 22, préalablement au premier cycle de fonctionnement de l'automate. Cette phase d'initialisation préalable à la communication est encore appelée phase de configuration de l'interface.

La description fonctionnelle de l'interface 2 selon ces différents modes particuliers de réalisation, a permis d'expliciter les différentes caractéristiques d'un procédé de communication entre un automate programmable industriel et un système utilisateur, tel qu'un système informatique.

## Revendications

1. Procédé de communication entre un automate programmable industriel (1) et un système utilisateur (3) qui sont connectés entre eux par l'intermédiaire d'une interface (2) qui comporte des premiers, deuxièmes, troisièmes, quatrièmes et cinquièmes moyens de mémorisation (210, 211, 23, 24, 25), l'automate comportant une unité de commande (10) connectée à un bus périphérique (11) sur lequel transitent des données et des adresses, chaque donnée étant associée à une adresse, caractérisé en ce qu'il consiste dans un premier temps, à déclencher des cycles de communication de façon synchrone avec les cycles de fonctionnement de l'automate, et dans un deuxième temps, au cours d'un cycle de communication, soit à effectuer en parallèle les opérations suivantes :
1) stocker chaque donnée émise par le système utilisateur (3) dans les premiers (respectivement deuxièmes) moyens de mémorisation (210, respectivement 211) et autoriser l'automate (1) à lire dans les deuxièmes (respectivement premiers) moyens de mémorisation (211, respectivement 210) selon qu'au cycle de communication précédent, on a stocké les données émises par le système utilisateur (3) dans les deuxièmes (respectivement premiers) moyens de mémorisation (211, respectivement 210) et autorisé l'automate à lire dans les premiers (respectivement deuxièmes) moyens de mémorisation (210, respectivement 211),
2) stocker dans les troisièmes moyens de mémorisation 23 chaque donnée transitant sur le bus périphérique (11) à l'adresse qui lui est associée après avoir stocké ladite adresse et ladite donnée dans les quatrièmes moyens de mémorisation (24), chaque fois que ladite donnée est différente de la donnée contenue dans les troisièmes moyens de mémorisation (23) à ladite adresse,
3) et communiquer au système utilisateur (3) les informations contenues dans les cinquièmes moyens de mémorisation (25) quand celui-ci en fait la demande,
soit à transférer dans les cinquièmes moyens de mémorisation (25) les informations contenues dans les quatrièmes moyens de mémorisation (24).

2. Procédé de communication selon la revendication 1, caractérisé en ce qu'il consiste en outre, au début de chaque cycle de communication, à stocker dans les premiers (respectivement deuxièmes) moyens de mémorisation (210, respectivement 211) toutes les données qui ont été stockées au cours du cycle précédent dans les deuxièmes (respectivement premiers) moyens de mémorisation (211, respectivement 210).

3. Procédé de communication selon l'une quelconque des revendications 1 ou 2, caractérisé en ce qu'il consiste en outre à attendre un nombre paramétrable de cycles de fonctionnement de l'automate avant de communiquer au système utilisateur (3) les informations contenues dans les cinquièmes moyens de mémorisation (25).

4. Procédé de communication selon l'une quelconque des revendications 1 à 3, l'interface (2) comportant en outre un compteur de cycles (263), caractérisé en ce qu'il consiste à incrémenter le compteur (263) à chaque cycle de fonctionnement de l'automate (1) et à stocker dans les quatrièmes moyens de mémorisation (24) la valeur de ce compteur(263) en même temps que chaque donnée et adresse afin de leur affecter un numéro de cycle.

5. Procédé de communication selon l'une quelconque des revendications 1 à 4, l'interface (2) comportant en outre une horloge (28), caractérisé en ce qu'il consiste en outre à stocker dans les quatrièmes moyens de mémorisation (24) la valeur de l'horloge (28) en même temps que chaque donnée et adresse afin de les dater.

6. Procédé de communication selon l'une quelconque des revendications 1 à 5, l'interface (2) comportant en outre des sixièmes moyens de mémorisation (262), caractérisé en ce qu'il consiste à autoriser l'automate (1) à lire une donnée dans les premiers ou deuxièmes moyens de mémorisation (210, 211) seulement si l'adresse associée à la donnée est contenue dans les sixièmes moyens de mémorisation (262).

7. Procédé de communication selon la revendication 6, caractérisé en ce que les adresses contenues dans les sixièmes moyens de mémorisation (262) ont été initialisées par le système utilisateur (3) préalablement au premier cycle de communication.

8. Procédé de communication selon l'une quelconque des revendications 1 à 7, l'interface (2) comportant en outre des septièmes moyens de mémorisation (2731), caractérisé en ce qu'il consiste en outre à stocker une donnée dans les troisièmes moyens de mémorisation (23) et une information dans les quatrièmes moyens de mémorisation (24), seulement si l'adresse associée à la donnée sur le bus périphérique (11) est contenue dans les septièmes moyens de mémorisation (2731).

9. Procédé de communication selon la revendication 8, caractérisé en ce que les adresses contenues dans les septièmes moyens de mémorisation (2731) ont été initialisées par le système utilisateur (3) préalablement au premier cycle de communication.

10. Interface (2) pour la mise en oeuvre d'un procédé de communication entre un automate programmable industriel (1), comportant une unité de commande (10) connectée à un bus périphérique (11), un système utilisateur (3), caractérisée en ce que elle comprend :
- un microprocesseur (22) connecté au système utilsateur (3) par l'intermédiaire d'un bus de communication (4),
- un port de communication (20) permettant d'adapter électriquement et logiquement le bus périphérique (11) en un bus d'adresses (201), de données (202) et de contrôle (203),
- des premiers et deuxièmes moyens de mémorisation (210 ; 211) accessibles en lecture par l'automate (1) et en écriture par le microprocesseur (22),
- des troisièmes moyens de mémorisation (23) accessibles en écriture par l'automate sous la commande d'un signal d'écriture (2711),
- des quatrièmes moyens de mémorisation (24) permettant le stockage des données circulant sur le bus d'adresses (201) et le bus de données (202), dans une pile (241) qui est accessible en lecture par le microprocesseur (22),
- des cinquièmes moyens de mémorisation (25) gérés exclusivement par le microprocesseur (22) et destinés à stocker temporairement le contenu de la pile (241),
- un organe de gestion (26) qui d'une part utilise les adresses émises par l'automate sur le bus d'adresses (201) pour affecter en alternance et de façon synchrone avec un cycle de fonctionnement de l'automate, sur demande du microprocesseur (22), les premiers (respectivement deuxièmes) moyens de mémorisation (210, 211) à l'automate (1) et des deuxièmes (respectivement premiers) moyens de mémorisation (211, 210) au microprocesseur (22), et qui d'autre part synchronise les opérations d'écriture du microprocesseur (22) et de lecture de l'automate (1) dans les moyens de mémorisation qui leur sont affectés,
- et un système d'acquisition (27) comportant des moyens de comparaison (272) entre une donnée transitant sur le bus de données (202) et une donnée émise par les troisièmes moyens de mémorisation (23) sous la commande d'un signal de lecture (2712) et des moyens de synchronisation (271), qui à chaque opération de lecture ou d'écriture de l'automate, d'une part séquencent le signal de lecture (2712) pour les troisièmes moyens de mémorisation (23), et d'autre part délivrent le signal d'écriture (2711) pour les troisièmes moyens de mémorisation, et un signal d'autorisation de stockage (2713) pour les quatrièmes moyens de mémorisation (24), en fonction de l'état d'un signal de comparaison (2721) émis par les moyens de comparaison (272) , et en ce que le microprocesseur (22) est apte soit à demander à l'organe de gestion (26) un changement d'affectation des premiers (210) et deuxièmes (211) moyens de mémorisation,
soit à écrire dans les moyens de mémorisation qui lui sont affectés par l'organe de gestion (26) chaque donnée émise par le système utilisateur (3) sur le bus de communication (4), à une adresse émise par le système sur ledit bus,
soit à émettre sur le bus de communication (4) en paralléle ou en série, des informations contenues dans les cinquièmes moyens de mémorisation (25), chaque fois que le système utilisateur (3) lui en fait la demande,
soit à transférer dans les cinquièmes moyens de mémorisation (25) les informations contenues dans la pile (241), lorsqu'il n'effectue aucune des deux opérations précitées et lorsque le signal d'autorisation de stockage (2713) est inactif.

11. Interface selon la revendication 10 caractérisée en ce que le microprocesseur (22) est en outre apte à rafraîchir, après chaque changement d'affectation des premiers (210) et deuxièmes (211) moyens de mémorisation, les moyens de mémorisation qui lui sont affectés, avec les données émises par le système utilisateur (3) après le précédent changement d'affectation.

12. Interface selon les revendications 10 ou 11, caractérisée en ce que l'organe de gestion (26) comprend en outre un compteur de cycles (263) dont les sorties sont reliées au microprocesseur (22) et qui est incrémenté à chaque cycle de fonctionnement de l'automate.

13. Interface selon la revendication 12, caractérisée en ce que le microprocesseur (22) est en outre apte à attendre un nombre paramétrable d'incrémentations du compteur de cycles (263) avant d'émettre sur le bus de communication (4), les informations contenues dans les cinquièmes moyens de mémorisation (25).

14. Interface selon les revendications 12 ou 13, caractérisée en ce que les sorties du compteur de cycles (263) sont reliées aux quatrièmes moyens de mémorisation (24) afin que ceux-ci séquencent en outre le stockage de la valeur du compteur (263) dans la pile (241) à chaque signal d'autorisation de stockage (2713) délivré par les moyens de synchronisation (271).

15. Interface selon l'une quelconque des revendications 10 à 14, caractérisée en ce qu'elle comprend en outre une horloge (28) dont les sorties sont reliées aux quatrièmes moyens de mémorisation (24) afin que ceux-ci séquencent en outre le stockage de la valeur de l'horloge (28) dans la pile (241) à chaque signal d'autorisation de stockage (2713) délivré par les moyens de synchronisation (271).

16. Interface selon l'une quelconque des revendications 10 à 15, caractérisée en ce que l'organe de gestion (26) comprend des sixièmes moyens de mémorisation (262) constitués d'une table de configuration (2621) qui contient chaque adresse pouvant être émise par l'automate (1) sur le bus périphérique (11), concaténée avec une donnée de contrôle-commande qui spécifie ladite adresse.

17. Interface selon la revendication 16, caractérisée en ce que la table de configuration (2621) étant accessible en écriture par le microprocesseur (22), celui-ci est apte à l'initialiser avec des données émises par le système utilisateur avant le premier cycle de fonctionnement de l'automate.

18. Interface selon l'une quelconque des revendications 10 à 17, caractérisée en ce que le système d'acquisition comprend en outre des moyens de reconnaissance (273) des adresses émises par l'automate (1) sur le bus périphérique (11), lesquels moyens de reconnaissance séquencent un signal d'autorisation (2734) pour les moyens de synchronisation (271), à partir d'adresses stockées dans des septièmes moyens de mémorisation (2731).

19. Interface selon la revendication 18, caractérisée en ce que les septièmes moyens de mémorisation (2731) étant accessibles en écriture par le microprocesseur (22), celui-ci est apte à les initialiser avec des adresses qui sont émises par le système utilisateur (3) avant le premier cycle de fonctionnement de l'automate.

## Patentansprüche

1. Verfahren für die Kommunikation zwischen einer programmierbaren industriellen Steuerung (1) und einem Benutzersystem (3), die miteinander durch eine Schnittstelle (2) verbunden sind, welche erste, zweite, dritte, vierte und fünfte Speichervorrichtungen (210, 211, 23, 24, 25) umfaßt, wobei die Steuerung eine Steuereinheit (10) umfaßt, die mit einem peripheren Bus (11) verbunden ist, auf dem Datenwörter und Adressen übertragen werden, wobei jedes Datenwort einer Adresse zugeordnet ist, dadurch gekennzeichnet, daß es zunächst darin besteht, synchron zu den Funktionszyklen der Steuerung Kommunikationszyklen auszulösen und anschließend während eines Kommunikationszyklus entweder parallel folgende Schritte auszuführen:
1) jedes von dem Benutzersystem (3) ausgegebene Datenwort in den ersten (beziehungsweise zweiten) Speichervorrichtungen (210 bzw. 211) zu speichern und die Steuerung (1) zu autorisieren, in den zweiten (bzw. ersten) Speichervorrichtungen (211 bzw. 210) zu lesen, je nachdem, ob die im vorangegangenen Kommunikationszyklus von dem Benutzersystem (3) ausgegebenen Daten in den zweiten bzw. ersten Speichervorrichtungen (211 bzw. 210) gespeichert wurden und die Steuerung autorisiert wurde, in den ersten (bzw. zweiten) Speichervorrichtungen (210 bzw. 211) zu lesen,
2) in den dritten Speichervorrichtungen 23 jedes Datenwort zu speichern, das auf dem peripheren Bus (11) an der ihm zugeordneten Adresse übertragen wird, nachdem man diese Adresse und dieses Datenwort in den vierten Speichervorrichtungen (24) gespeichert hat, und zwar jedesmal, wenn dieses Datenwort von dem in den dritten Speichervorrichtungen (23) an dieser Adresse enthaltenen Speicherwort abweicht,
3) und dem Benutzersystem (3) die in den fünften Speichervorrichtungen (25) enthaltenen Informationen übermittelt, wenn dieses sie abruft,
oder die in den vierten Speichervorrichtungen (24) enthaltenen Informationen in die fünften Speichervorrichtungen (25) zu übertragen.

2. Kommunikationsverfahren nach Anspruch 1, dadurch gekennzeichnet, daß es außerdem darin besteht, zu Beginn jedes Kommunikationszyklus in ersten (bzw. zweiten) Speichervorrichtungen (210 bzw. 211) alle Daten zu speichern, die während des vorherigen Zyklus in den zweiten (bzw. ersten) Speichervorrichtungen (211 bzw. 210) gespeichert wurden.

3. Kommunikationsverfahren nach einem der Ansprüche 1 oder 2, dadurch gekennzeichnet, daß es außerdem darin besteht, eine Anzahl parametrierbarer Funktionszyklen der Steuerung abzuwarten, bevor es dem Benutzersystem (3) die in den fünften Speichervorrichtungen (25) enthaltenen Informationen übermittelt.

4. Kommunikationsverfahren nach einem der Ansprüche 1 bis 3, bei dem die Schnittstelle (2) außerdem einen Zykluszähler (263) umfaßt, dadurch gekennzeichnet, daß es darin besteht, den Zähler (263) bei jedem Funktionszyklus der Steuerung (1) zu inkrementieren und den Wert dieses Zählers (263) in den vierten Speichervorrichtungen (24) zur gleichen Zeit wie jedes Datenwort und jede Adresse zu speichern, um ihnen eine Zyklusnummer zuzuweisen.

5. Kommunikationsverfahren nach einem der Ansprüche 1 bis 4, bei dem die Schnittstelle (2) außerdem einen Zeitgeber (28) umfaßt, dadurch gekennzeichnet, daß es außerdem darin besteht, in den vierten Speichervorrichtungen (24) den Wert des Zeitgebers (28) zur gleichen Zeit wie jedes Datenwort und jede Adresse zu speichern, um sie zu datieren.

6. Kommunikationsverfahren nach einem der Ansprüche 1 bis 5, bei dem die Schnittstelle (2) außerdem sechste Speichervorrichtungen (262) umfaßt, dadurch gekennzeichnet, daß es darin besteht, die Steuerung (1) zu autorisieren, nur dann ein Datenwort in den ersten oder zweiten Speichervorrichtungen (210, 211) zu lesen, wenn die dem Datenwort zugewiesene Adresse in den sechsten Speichervorrichtungen (262) enthalten ist.

7. Kommunikationsverfahren nach Anspruch 6, dadurch gekennzeichnet, daß die in den sechsten Speichervorrichtungen (262) enthaltenen Adressen durch das Benutzersystem (3) vor dem ersten Kommunikationszyklus initialisiert wurden.

8. Kommunikationsverfahren nach einem der Ansprüche 1 bis 7, bei dem die Schnittstelle (2) außerdem siebte Speichervorrichtungen (2731) umfaßt, dadurch gekennzeichnet, daß es außerdem darin besteht, nur dann ein Datenwort in den dritten Speichervorrichtungen (23) und eine Information in den vierten Speichervorrichtungen (24) zu speichern, wenn die dem Datenwort auf dem peripheren Bus (11) zugewiesene Adresse in den siebten Speichervorrichtungen (2731) enthalten ist.

9. Kommunikationsverfahren nach Anspruch 8, dadurch gekennzeichnet, daß die in den siebten Speichervorrichtungen (2731) enthaltenen Adressen von dem Benutzersystem (3) vor dem ersten Kommunikationszyklus initialisiert wurden.

10. Schnittstelle (2) zur Anwendung eines Verfahrens zur Kommunikation zwischen einer programmierbaren industriellen Steuerung (1), die eine Steuereinheit (10) umfaßt, die mit einem peripheren Bus (11) verbunden ist, und einem Benutzersystem (3), dadurch gekennzeichnet, daß sie umfaßt:
- einen mit dem Benutzersystem (3) durch einen Kommunikationsbus (4) verbundenen Mikroprozessor (22),
- einen Kommunikationsport (20), der elektrisch und logisch ermöglicht, den peripheren Bus (11) in einen Adreßbus (201), Datenbus (202) und Steuerbus (203) anzupassen,
- erste und zweite Speichervorrichtungen (210; 211), die für die Steuerung (1) zum Lesen und den Mikroprozessor (22) zum Schreiben zugänglich sind,
- dritte Speichervorrichtungen (23), die für die Steuerung (1) zum Schreiben durch Steuerung durch ein Schreibsignal (2711) zugänglich sind,
- vierte Speichervorrichtungen (24), welche die Speicherung der auf dem Adreßbus (201) und dem Datenbus (202) zirkulierenden Daten in einem Rückstellspeicher (241) ermöglichen, der für den Mikroprozessor (22) zum Lesen zugänglich ist,
- fünfte Speichervorrichtungen (25), die ausschließlich von dem Mikroprozessor (22) gesteuert werden und dazu bestimmt sind, den Inhalt des Rückstellspeichers (241) vorübergehend zu speichern,
- eine Steuervorrichtung (26), die zum einen die von der Steuerung auf den Adreßbus (201) gegebenen Adressen benutzt, um abwechselnd und synchron mit einem Funktionszyklus der Steuerung auf Befehl des Mikroprozessors (22) hin die ersten (bzw. zweiten) Speichervorrichtungen (210, 211) der Steuerung (1) und die zweiten (bzw. ersten) Speichervorrichtungen (211, 210) dem Mikroprozessor (22) zuzuweisen, und die zum anderen die Schreibvorgänge des Mikroprozessors (22) und Lesevorgänge der Steuerung (1) in den diesen zugeordneten Speichervorrichtungen synchronisiert,
- sowie ein Erfassungssystem (27), das Vorrichtungen (272) zum Vergleich zwischen einem auf dem Datenbus (202) übertragenen Datenwort und einem von den dritten Speichervorrichtungen (23) durch Steuerung durch ein Lesesignal (2712) ausgegebenen Datenwort und Synchronisierungsvorrichtungen (271) aufweist, die bei jedem Lese- oder Schreibvorgang der Steuerung einerseits für die dritten Speichervorrichtungen (23) das Lesesignal (2712) sequenzieren und andererseits für die dritten Speichervorrichtungen das Schreibsignal (2711) ausgeben, sowie ein Speicherungsautorisierungssignal (2713) für die vierten Speichervorrichtungen (24), entsprechend dem Zustand eines Vergleichssignals (2721), das von den Vergleichsvorrichtungen (272) ausgegeben wurde, sowie dadurch, daß der Mikroprozessor (22) geeignet ist, entweder der Steuervorrichtung (26) den Befehl zu geben, eine Zuordnungsänderung der ersten (210) und zweiten Speichervorrichtungen (211) vorzunehmen,
oder in die ihm von der Steuervorrichtung (26) zugeordneten Speichervorrichtungen jedes von dem Benutzersystem (3) auf dem Kommunikationsbus (4) ausgegebene Datenwort an einer von dem System auf dem Bus ausgegebenen Adresse zu schreiben,
oder auf den Kommunikationsbus (4) parallel oder seriell Informationen zu senden, die in den fünften Speichervorrichtungen (25) enthalten sind, und zwar jedesmal, wenn das Benutzersystem (3) ihm dazu den Befehl gibt,
oder den fünften Speichervorrichtungen (25) die in dem Rückstellspeicher (241) enthaltenen Informationen zu übertragen, wenn es keinen der beiden vorgenannten Vorgänge ausführt, und wenn das Speicherungsautorisationssignal (2713) inaktiv ist.

11. Schnittstelle nach Anspruch 10, dadurch gekennzeichnet, daß der Mikroprozessor (22) außerdem geeignet ist, nach jeder Zuordnungsänderung der ersten (210) und zweiten (211) Speichervorrichtungen die Speichervorrichtungen aufzufrischen, die ihm zugeordnet sind, und zwar mit den von dem Benutzersystem (3) nach der vorherigen Zuordnungsänderung ausgegebenen Daten.

12. Schnittstelle nach den Ansprüchen 10 oder 11, dadurch gekennzeichnet, daß die Steuervorrichtung (26) außerdem einen Zykluszähler (263) aufweist, dessen Ausgänge mit dem Mikroprozessor (22) verbunden sind, und der bei jedem Funktionszyklus der Steuerung inkrementiert wird.

13. Schnittstelle nach Anspruch 12, dadurch gekennzeichnet, daß der Mikroprozessor (22) außerdem geeignet ist, eine Anzahl parametrierbarer Inkrementierungen des Zykluszählers (263) abzuwarten, bevor er die in den fünften Speichervorrichtungen (25) enthaltenen Informationen auf dem Kommunikationsbus (4) sendet.

14. Schnittstelle nach den Ansprüchen 12 oder 13, dadurch gekennzeichnet, daß die Ausgänge des Zykluszählers (263) mit den vierten Speichervorrichtungen (24) verbunden sind, damit diese außerdem die Speicherung des Wertes des Zählers (263) in dem Rückstellspeicher (241) bei jedem von den Synchronisierungsvorrichtungen (271) gelieferten Speicherungsautorisationssignal (2713) sequenzieren.

15. Schnittstelle nach einem der Ansprüche 10 bis 14, dadurch gekennzeichnet, daß sie außerdem einen Zeitgeber (28) umfaßt, dessen Ausgänge mit den vierten Speichervorrichtungen (24) verbunden sind, damit diese außerdem die Speicherung des Wertes des Zeitgebers (28) in dem Rückstellspeicher (241) bei jedem von den Synchronisierungsvorrichtungen (271) gelieferten Speicherungsautorisationssignal (2713) sequenzieren.

16. Schnittstelle nach einem der Ansprüche 10 bis 15, dadurch gekennzeichnet, daß die Steuervorrichtung (26) sechste Speichervorrichtungen (262) umfaßt, die aus einer Konfigurationstabelle (2621) bestehen, die jede Adresse enthält, die von der Steuerung (1) auf dem peripheren Bus (11) ausgegeben werden kann, verkettet mit einem Steuer-Kontroll-Datenwort, das diese Adresse spezifiert.

17. Schnittstelle nach Anspruch 16, dadurch gekennzeichnet, daß, nachdem die Konfigurationstabelle (2621) für den Mikroprozessor (22) zum Schreiben zugänglich ist, dieser geeignet ist, sie mit von dem Benutzersystem vor dem ersten Funktionszyklus der Steuerung ausgegebenen Daten zu initialisieren.

18. Schnittstelle nach einem der Ansprüche 10 bis 17, dadurch gekennzeichnet, daß das Erfassungssystem außerdem Erkennungsvorrichtungen (273) für die von der Steuerung auf dem peripheren Bus (11) gesendeten Adressen aufweist, welche Erkennungsvorrichtungen ein Autorisationssignal (2734) für die Synchronisierungsvorrichtungen (271) von in siebten Speichervorrichtungen (2731) gespeicherten Adressen aus sequenzieren.

19. Schnittstelle nach Anspruch 18, dadurch gekennzeichnet, daß, nachdem die siebten Speichervorrichtungen (2731) für den Mikroprozessor (22) zum Schreiben zugänglich sind, dieser geeignet ist, sie mit den Adressen zu initialiseren, die von dem Benutzersystem (3) vor dem ersten Funktionszyklus der Steuerung ausgegeben wurden.

## Claims

1. Method of communication between a programmable industrial controller (1) and a user system (3) which are interconnected via an interface (2) including first, second, third, fourth and fifth storage means (210, 211, 23, 24, 25), the controller including a control unit (10) connected to a peripheral bus (11) over which data and addresses travel, each data item being associated with an address, characterized in that it consists initially in triggering communications cycles synchronizing with the operating cycles of the controller, and secondly, during a communications cycle, either in performing the following operations in parallel:
1) storing each data item emitted by the user system (3) in the first (respectively the second) storage means (210, respectively 211) and authorizing the controller (1) to read from the second (respectively the first) storage means (211, respectively 210), depending on whether, during the preceding communications cycle, data emitted by the user system (3) has been stored in the second (respectively the first) storage means (211, respectively 210), and the controller has been authorized to read from the first (respectively the second) storage means (210, respectively 211).
2) storing each data item travelling over the peripherals bus (11) in the third storage means (23) at the address associated therewith after storing said address and said data in the fourth storage means (24), each time said data item is different from the data contained at said address in the third storage means (23), and
3) communicating the information contained in the fifth storage means (25) to the user system (3) on request therefrom;
or else in transferring the information contained in the fourth storage means (24) to the fifth storage means.

2. Communications method according to claim 1, characterized in that it further consists, at the beginning of each communications cycle, in storing in the first (respectively the second) storage means (210, respectively 211) all of the data stored during the preceding cycle in the second (respectively the first) storage means (211, respectively 210).

3. Communications method according to any one of claims 1 or 2, characterized in that it further consists in waiting for a parameterizable number of operating cycles of the controller before communicating the information contained in the fifth storage means (25) to the user system (3).

4. Communications method according to any one of claims 1 to 3, in which the interface (2) further includes a cycle counter (263), characterized in that it consists in incrementing the counter (263) on each operating cycle of the controller (1) and in storing the value of said counter (263) in the fourth storage means (24) together with each data item and address so as to allocate a cycle number thereto.

5. Communications method according to any one of claims 1 to 4, in which the interface (2) further includes a clock (28), characterized in that it further consists in storing the value of the clock (28) in the fourth storage means (24) together with each data item and address in order to date them.

6. Communications method according to any one of claims 1 to 5, in which the interface (2) further includes sixth storage means (262), characterized in that it consists in authorizing the controller (1) to read a data item in the first or second storage means (210, 211) only if the address associated with the data is contained in the sixth storage means (262).

7. Communications method according to claim 6, characterized in that the addresses contained in the sixth storage means (262) are initialized by the user system (3) before the first communications cycle.

8. Communications method according to any one of claims 1 to 7, in which the interface (2) further includes seventh storage means (2731), characterized in that it further consists in storing data in the third storage means (23) and an information item in the fourth storage means (24) only if the address associated with the data on the peripherals bus (11) is contained in the seventh storage means (2731).

9. Communications method according to claim 8, characterized in that the addresses contained in the seventh storage means (2731) are initialized by the user system (3) prior to the first communications cycle.

10. Interface (2) for implementing a communications method between a programmable industrial controller (1) including a control unit (10) connected to a peripherals bus (11), and a user system (3), characterized in that it comprises:
- a microprocessor (22) connected to the user system (3) via a communications bus (4),
- a communications port (20) enabling the peripherals bus (11) to be matched electrically and logically with an address bus (201), a data bus (202) and a control bus (203),
- first and second storage means (210; 211) accessible for reading by the controller (1) and for writing by the microprocessor (22),
- third storage means (23) accessible for writing by the controller under the control of a write signal (2711),
- fourth storage means (24) enabling the data travelling on the address bus (201) and the data bus (202) to be stored in a stack (241) which is accessible for reading by the microprocessor (22),
- fifth storage means (25) controlled solely by the microprocessor (22) and intended to store the contents of the stack (241) on a temporary basis,
- a control member (26) which firstly uses the addresses emitted by the controller on the address bus (201) to allocate the first (respectively the second) storage means (210, 211) to the controller (1) and the second (respectively first) storage means (211, 210) to the microprocessor (22) alternately and synchronously with an operating cycle of the controller, on request of the microprocessor (22), and secondly synchronizes the write operations of the microprocessor (22) and the read operations of the controller (1) in the storage means that are allocated thereto, and
- an acquisition system (27) including comparator means (272) for comparing data travelling on the data bus (202) with a data item emitted by the third storage means (23), under the control of a read signal (2712), and synchronizing means (271) which, on each read or write operation of the controller, firstly sequence the read signal (2712) for the third storage means (23), and secondly deliver the write signal (2711) for the third storage means, and a storage authorization signal (2713) for the fourth storage means (24), as a function of the state of a comparison signal (2721) emitted by the comparator means (272), and in that the microprocessor (22) is suitable either for requesting the control member (26) to change the allocation of the first (210) and second (211) storage means,
or to write in the memory means which are allocated thereto by the control member (26) each of the data items emitted by the user system (3) on the communications bus (4) at an address emitted by the system on said bus,
or to emit in parallel or in series on the communications bus (4) the information contained in the fifth storage means (25), each time the user system (3) makes a request therefor,
or to transfer the information contained in the stack (241) into the fifth storage means (25) each time it is not performing either of the two above-specified operations and whenever the storage authorization signal (2713) is inactive.

11. Interface according to claim 10, characterized in that the microprocessor (22) is also suitable, after each changeover in the allocation of the first (210) and second (211) storage means, to refresh the storage means allocated to it with the data emitted by the user system (3) after the preceding change of allocation.

12. Interface according to claims 10 or 11, characterized in that the control member (26) further includes a cycle counter (263) whose outputs are connected to the microprocessor (22) and which is incremented on each operating cycle of the controller.

13. Interface according to claim 12, characterized in that microprocessor (22) is also suitable for waiting a parameterizable number of incrementations of the cycle counter (263) before emitting the information contained in the fifth storage means (25) over the communications bus (4).

14. Interface according to claims 12 or 13, characterized in that the outputs of the cycle counter (263) are connected to the fourth storage means (24) in order to enable them further to sequence storage of the value of counter (263) in the stack (241) on each storage authorization signal (2713) delivered by the synchronizing means (271).

15. Interface according to any one of claims 10 to 14, characterized in that it further includes a clock (28) whose outputs are connected to the fourth storage means (24) in order to enable them further to store the value of the clock (28) in the stack (241) on each storage authorization signal (2713) delivered by the synchronizing means (271).

16. Interface according to any one of claims 10 to 15, characterized in that control member (26) includes sixth storage means (262) constituted by a configurations table (2621) which contains each address that can be emitted by the controller (1) on the peripherals bus (11), concatenated with a control-monitoring data item which specifies said address.

17. Interface according to claim 16, characterized in that the configurations table (2621) is write accessible by the microprocessor (22), which microprocessor is suitable for initializing it with data emitted by the user system before the first operating cycle of the controller.

18. Interface according to any one of claims 10 to 17, characterized in that the acquisition system further includes recognition means (273) for recognizing addresses emitted by the controller (1) on the peripherals bus (11), which recognition means sequence an authorization signal (2734) for the synchronizing means (271) on the basis of addresses stored in the seventh storage means (2731).

19. Interface according to claim 18, characterized in that the seventh storage means (2731) being write accessible by the microprocessor (22), the latter is suitable for initializing them with addresses that are emitted by the user system (3) before the first operating cycle of the controller.
